# EUROPEAN PATENT APPLICATION

(11) **EP 1 798 842 A1**
(43) Date of publication of application: **20.06.2007**
(21) Application number: 06002553.3
(22) Date of filing: 08.02.2006
(51) Int. Cl.: H02K 3/16, H02K 21/46, H02K 19/08, H02P 1/50

(54) **Self magnetizing motor and method for winding coils on stator thereof**

(30) Priority: 14.12.2005 KR 2005123424
(71) Applicant: LG Electronics Inc., Yongdungpo-gu Seoul (KR)
(72) Inventor: Shim, Jang-Ho, Yangcheon-Gu Seoul (KR); Lee, Sung-Ho, Dongan-Gu Anyang Gyeonggi-Do (KR); Kim, Jae-Min, Seoul (KR); Choi, Jae-Hak, Seodaeum-Gu Seoul (KR); Park, Jin-Soo, Incheon (KR)
(74) Representative: Vossius & Partner

(57) **Abstract**

Provided are a self magnetizing motor and a method for wining coils on a stator thereof, wherein an exciter pole and exciter coils are formed at a stator and an exciter magnetizable portion is disposed at an outer circumferential surface of a rotor, whereby the self magnetizing motor can be operated by an induced electromotive force generated by a main coil, a sub coil and a conductive bar of the rotor from its initial driving to a speed prior to a synchronous speed, and operated by a magnetomotive force generated by the exciter pole and the exciter magnetizable portion at the synchronous speed, thereby improving an efficiency of the motor, a power factor, and a synchronization characteristic.

## Description

The present invention relates to a self magnetizing motor and a method for winding coils on a stator thereof, and particularly, to a self magnetizing motor which is operated by an induced electromotive force generated by a main coil, a sub coil and a conductive bar of a rotor from its initial driving to a speed prior to a synchronous speed, and operated by a magnetomotive force generated by an exciter pole and an exciter magnetizable portion at the synchronous speed, and a method for wining coils on a stator thereof.

In general, a motor is a device for converting electrical energy into kinetic energy, which may be divided into a direct current (DC) motor and a alternating current (AC) motor according to power to be used.

The AC motor may include an induction motor, a synchronous motor and a commutator motor. The induction motor may be classified into a single-phase induction motor and a three-phase induction motor.

The single-phase induction motor generally has a simple and firm structure, and is relatively easy to obtain a single-phase power which is widely used as a driving power of electric devices for domestic, office, industry and architecture.

The single-phase induction motor is not initiated by itself and thus the main coil and also a sub coil having a phase of current which goes 90° ahead as compared to the phase of the current applied to the main coil are provided therefor, in order to generate an starting torque. The main and sub coils are wound in induction slots using a particular winding method.

In the related art sing-phase induction motor, when an AC power is applied to the main coil and the sub coil wound in the induction slots at an initial driving of the single-phase induction motor, a rotating magnetic field of a stator is generated. At this time, an induced current is applied to a conductive bar of a rotor, and the rotor then starts to rotate. Here, the rotor rotates with being slipped. At this time, the current applied to the sub coil is shielded by a current cut-off device, and the current may only be applied to the main coil.

However, in the related art single-phase induction motor, because the rotor is rotated by an induction operation, the rotor may be slipped and thus an efficiency of the motor may be decreased.

Therefore, an object of the present invention is to provide a self magnetizing motor capable of improving an efficiency of a motor, a power factor, and a synchronization characteristic by forming an exciter pole and exciter coils at a stator to rotate a rotor with a synchronous speed of a magnetic field of the stator, and by disposing an exciter magnetizable portion at an outer circumferential surface of the rotor, and a method for winding coils on a stator thereof.

To achieve these and other advantages and in accordance with the purpose of the present invention, as embodied and broadly described herein, there is provided a self magnetizing motor comprising: a stator provided with a plurality of stator slots and a plurality of exciter slots disposed along an inner circumferential surface thereof with a particular interval therebetween, teeths respectively positioned between each stator slot, an exciter pole positioned between the exciter slots, an end portion of the exciter pole being disposed to be closer to a center portion of the stator than an end portion of the teeth is disposed to be close to the center portion of the stator; a main coil wound in each stator slot; a sub coil having a current phase going 90° ahead as compared to that of the main coil, and wound in each stator slot; an exciter coil wound in each exciter slot; and a rotor rotatably inserted in the center portion of the stator, and having an exciter magnetizable portion disposed at an outer circumferential surface thereof to be magnetized by the exciter coil.

A gap between the end portion of the exciter pole and the outer circumferential surface of the exciter magnetizing portion is formed to be relatively narrower than a gap between the end portion of the teeth and the outer circumferential surface of the exciter magnetizing portion.

The sub coil is wound in each stator slot adjacent to each exciter slot among the plurality of stator slots to be then overlapped thereon.

The main coil is inserted into a 1^{st} stator slot, and wound sequentially via a 12^{th} stator slot, a 2^{nd} stator slot, a 11^{th} stator slot, a 3^{rd} stator slot, a 10^{th} stator slot, a 4^{th} stator slot, a 9^{th} stator slot, a 24^{th} stator slot, a 13^{th} stator slot, a 23^{rd} stator slot, a 14^{th} stator slot, a 22^{nd} stator slot, a 15^{th} stator slot, a 21^{st} stator slot, and a 16^{th} stator slot, to be then drawn out. The sub coil is inserted into a 6^{th} stator slot, and wound sequentially via a 20^{th} stator slot, a 5^{th} stator slot, the 20^{th} stator slot, a 4^{th} stator slot, a 21^{st} stator slot, a 3^{rd} stator slot, a 22^{nd} stator slot, a 7^{th} stator slot, a 17^{th} stator slot, a 8^{th} stator slot, the 17^{th} stator slot, a 9^{th} stator slot, a 16^{th} stator slot, a 10^{th} stator slot, and a 15^{th} stator slot, to be then drawn out.

Preferably, a thickness between the outer circumferential surface of the stator and the exciter slot is relatively greater than a thickness between the outer circumferential surface of the stator and the stator slot.

Preferably, a part (i.e., referred to as a pole shoe) of an end portion of each teeth adjacent to each exciter slot among the plurality of teeths is removed therefrom.

A taper portion is preferably formed at the exciter pole.

To achieve these and other advantages and in accordance with the purpose of the present invention, as embodied and broadly described herein, a method for wining coils on a stator of a self magnetizing motor is related to winding of main and sub coils on a stator of a single-phase 2-pole 24-slot type motor, wherein the sub coil is wound in each stator slot adjacent to each exciter slot among a plurality of stator slots to be then overlapped thereon.

The main coil is inserted into a 1^{st} stator slot, and wound sequentially via a 12^{th} stator slot, a 2^{nd} stator slot, a 11^{th} stator slot, a 3^{rd} stator slot, a 10^{th} stator slot, a 4^{th} stator slot, a 9^{th} stator slot, a 24^{th} stator slot, a 13^{th} stator slot, a 23^{rd} stator slot, a 14^{th} stator slot, a 22^{nd} stator slot, a 15^{th} stator slot, a 21^{st} stator slot, and a 16^{th} stator slot, to be then drawn out.

The sub coil is inserted into a 6^{th} stator slot, and wound sequentially via a 20^{th} stator slot, a 5^{th} stator slot, the 20^{th} stator slot, a 4^{th} stator slot, a 21^{st} stator slot, a 3^{rd} stator slot, a 22^{nd} stator slot, a 7^{th} stator slot, a 17^{th} stator slot, a 8^{th} stator slot, the 17^{th} stator slot, a 9^{th} stator slot, a 16^{th} stator slot, a 10^{th} stator slot, and a 15^{th} stator slot, to be then drawn out.

The accompanying drawings, which are included to provide a further understanding of the invention and are incorporated in and constitute a part of this specification, illustrate embodiments of the invention and together with the description serve to explain the principles of the invention.

In the drawings:
Fig. 1 is a disassembled perspective view showing a self magnetizing motor according to the present invention;
Fig. 2 is a horizontal sectional view showing the self magnetizing motor according to the present invention;
Fig. 3 is a view showing main coils in Fig. 2;
Fig. 4 is a view showing sub coils in Fig. 2;
Fig. 5 is an enlarged view showing main parts of Fig. 2;
Fig. 6 is a plane view showing a winding structure of a stator in the self magnetizing motor according to the present invention;
Fig. 7 is an extended view showing a method for winding coils on a stator of the self magnetizing motor according to the present invention, in which a method for winding main coils on the stator is described; and
Fig. 8 is an extended view showing a method for winding coils on a stator of the self magnetizing motor according to the present invention, in which a method for winding sub coils on the stator is described.

Reference will now be made in detail to the preferred embodiments of the present invention, examples of which are illustrated in the accompanying drawings.

Hereinafter, explanations will now be made in detail for a self magnetizing motor and a method for winding coils on a stator thereof with reference to the accompanying drawings.

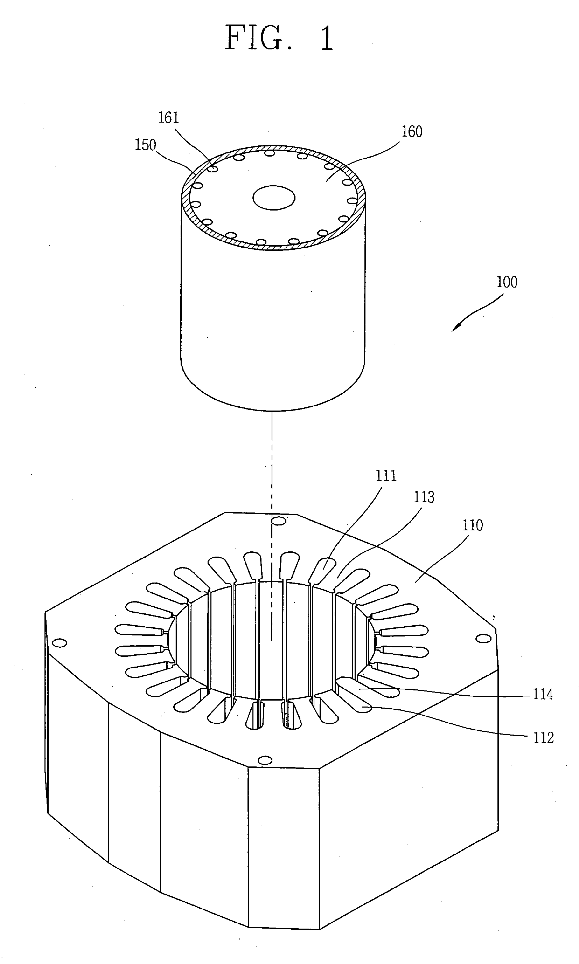

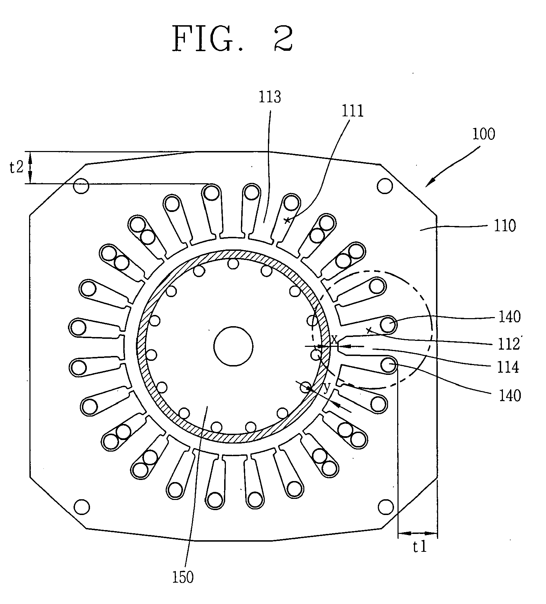

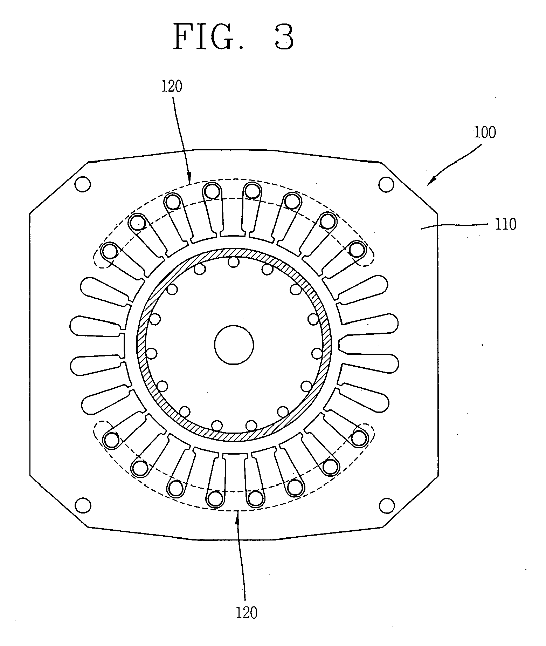

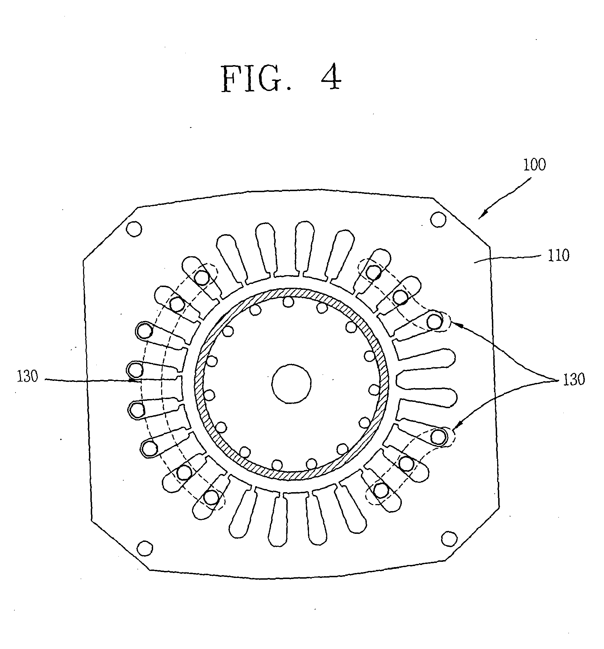

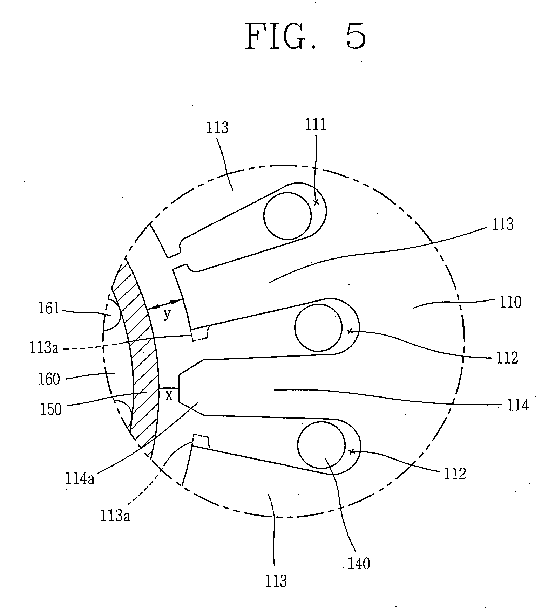

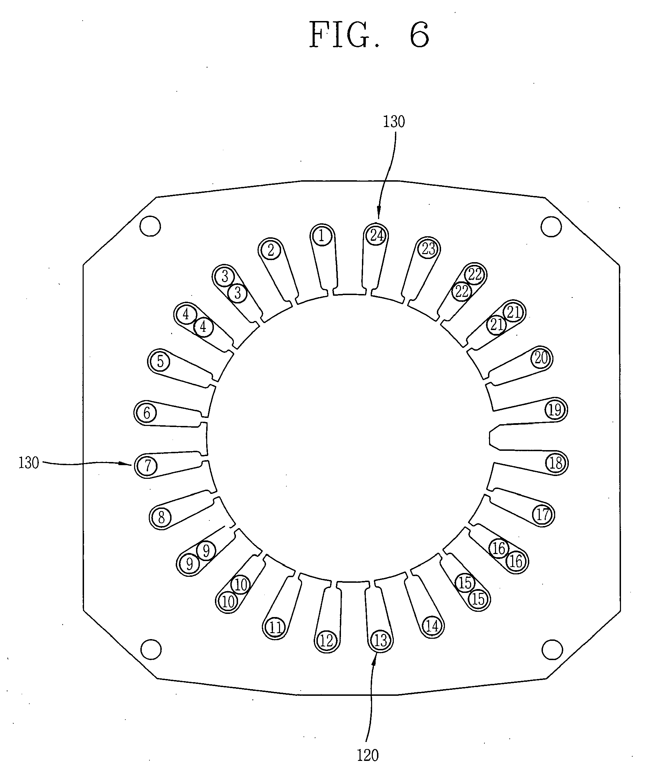

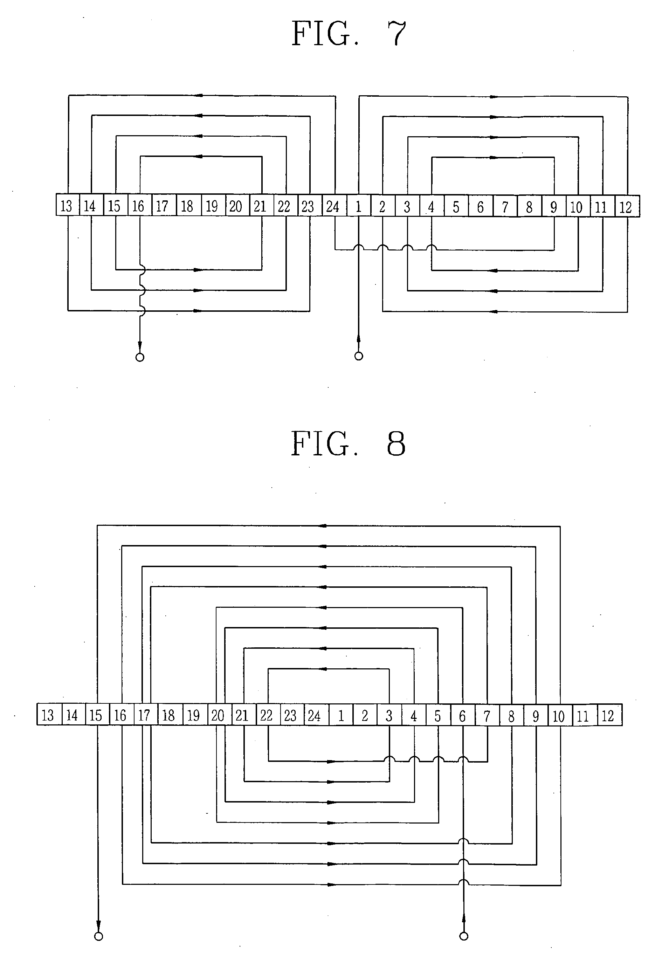

Fig. 1 is a disassembled perspective view showing an exemplary self magnetizing motor according to the present invention, Fig. 2 is a longitudinal sectional view showing the self magnetizing motor according to the present invention, Fig. 3 is a view showing main coils in Fig. 2, Fig. 4 is a view showing sub coils in Fig. 2, Fig. 5 is a enlarged view showing main parts of Fig. 2, Fig. 6 is a plane view showing a winding structure of a stator in the self magnetizing motor according to the present invention, Fig. 7 is an extended view showing a method for winding coils on a stator of the self magnetizing motor according to the present invention, in which a method for winding main coils on the stator is described, and Fig. 8 is an extended view showing a method for winding coils on a stator of the self magnetizing motor according to the present invention, in which a method for winding sub coils on the stator is described.

The self magnetizing motor 100 according to the present invention can be operated by an induced electromotive force generated by a main coil 120, a sub coil 130 and a conductive bar 161 of a rotor 160 from its initial driving to a speed prior to a synchronous speed, and be operated by a magnetomotive force generated by an exciter pole 114 and an exciter magnetizable portion 150 at the synchronous speed by installing the exciter magnetizable portion 150 at an outer circumferential surface of the rotor 160 and installing the exciter pole 114 at a stator 110 to thus selectively magnetize the exciter magnetizable portion 150. Here, the self magnetizing motor 100 which, for example, has a structure of single-phase, two poles and 24 stator slots 111 will be explained.

As shown in Figs. 1 through 6, the self magnetizing motor 100 according to the present invention can comprise: a stator 110 provided with a plurality of stator slots 111 and a plurality of exciter slots 112 disposed at an inner circumferential surface of the stator 110 with a particular interval therebetween, teeths 113 respectively positioned between each stator slot 111, and an exciter pole 114 positioned between the exciter slots 112, an end portion of the exciter pole 114 being disposed to be closer to a center portion of the stator 110 than an end portion of the teeth 113 is disposed to be close to the center portion of the stator 110; a main coil 120 wound in each stator slot 111; a sub coil having a current phase going 90° ahead as compared to that of the main coil 120, and wound in each stator slot 111; an exciter coil 140 wound in each exciter slot 112; and a rotor 160 rotatably inserted into the center portion of the stator 110, and having an exciter magnetizable portion disposed at an outer circumferential surface thereof to thus be magnetized by the exciter coil 140.

A gap (x) between an end portion of the exciter pole 114 and an outer circumferential surface of the exciter magnetizable portion 150 is narrower than a gap (y) between the end portion of the teeth 113 and the outer circumferential surface of the exciter magnetizable portion 150.

Here, a magnetic permeability of air is 1/3000 times as low as that of the exciter pole 114, and accordingly the magnetic reluctance thereof is great. Typically, a strength of the magnetic field is in proportional to a current "I": and the number of turns, and is in inversely proportional to the magnetic reluctance "R". Accordingly, as the interval (x) between the end portion of the exciter pole 114 and the exciter magnetizable portion 150 is narrower, the strength of the magnetic field is increased by approximately y/x, thereby increasing the magnetization rate of the exciter magnetizable portion 150.

The exciter magnetizable portion 150 is formed of a material which can be selectively magnetized by a current flowing on the exciter coil 140 wound in the exciter slot 112, namely, a magnetizable or demagnetizable material.

Here, the exciter magnetizable portion 150 may be constructed as a body separate from the rotor 160 to be mounted at the outer circumferential surface of the rotor 160. At this time, the exciter magnetizable portion 150 may preferably be formed as a cylindrical structure.

Although not shown in the drawings, the exciter magnetizable portion 150 may be disposed as a layer shape at the outer circumferential surface of the rotor 160.

A thickness t1 between an outer circumferential surface of the stator 110 and the exciter slot 112 is preferably formed to be relatively greater than a thickness t2 between the outer circumferential surface of the stator 110 and the stator slot 111, in order to compensate an area of the stator 110 corresponding to an area decreased upon forming the exciter slot 112 by considering a magnetic saturation of the stator 110.

A part (i.e., pole shoe) 113a of an end portion of each teeth 113 adjacent to each exciter slot 112 among the plurality of teeths 113 is preferably removed.

A taper portion 114a is preferably formed at the end portion of the exciter pole 114.

In addition, the main coil 120 and the sub coil 130 are wound in the plurality of stator slots 111 according to a particular winding method. Here, the sub coil 130 is wound in each stator slot 111 adjacent to each exciter slot 112 among the plurality of stator slots 111 by being overlapped thereon.

As shown in Figs. 6 and 7, the main coil 120 is inserted into a first (1^{st}) stator slot, and wound sequentially via a 12^{th} stator slot, a 2^{nd} stator slot, a 11^{th} stator slot, a 3^{rd} stator slot, a 10^{th} stator slot, a 4^{th} stator slot, a 9^{th} stator slot, a 24^{th} stator slot, a 13^{th} stator slot, a 23^{rd} stator slot, a 14^{th} stator slot, a 22^{nd} stator slot, a 15^{th} stator slot, a 21^{st} stator slot, and a 16^{th} stator slot, to be then drawn out.

As shown in Figs. 6 and 8, the sub coil 130 is inserted into a 6^{th} stator slot, and wound sequentially via a 20^{th} stator slot, a 5^{th} stator slot, the 20^{th} stator slot, a 4^{th} stator slot, a 21^{st} stator slot, a 3^{rd} stator slot, a 22^{nd} stator slot, a 7^{th} stator slot, a 17^{th} stator slot, a 8^{th} stator slot, the 17^{th} stator slot, a 9^{th} stator slot, a 16^{th} stator slot, a 10^{th} stator slot, and a 15^{th} stator slot, to be then drawn out. Here, the sub coil 130 is wound in the 20th and 17th stator slots by being overlapped thereon.

Hereinafter, a method for wining coils on a stator of a self magnetizing motor according to the present invention will now be explained.

A method for winding coils on a stator of a self magnetizing motor is related to winding of main and sub coils 120 and 130 on a stator of a single-phase two-pole 24-slot type motor, wherein the sub coil 130 is wound in each stator slot adjacent to each exciter slot among a plurality of stator slots by being overlapped thereon.

As shown in Fig. 7, the main coil 120 is inserted into a 1^{st} stator slot, and wound sequentially via a 12^{th} stator slot, a 2^{nd} stator slot, a 11^{th} stator slot, a 3^{rd} stator slot, a 10^{th} stator slot, a 4^{th} stator slot, a 9^{th} stator slot, a 24^{th} stator slot, a 13^{th} stator slot, a 23^{rd} stator slot, a 14^{th} stator slot, a 22^{nd} stator slot, a 15^{th} stator slot, a 21^{st} stator slot, and a 16^{th} stator slot, to be then drawn out.

The sub coil 130 is inserted into a 6^{th} stator slot, and wound sequentially via a 20^{th} stator slot, a 5^{th} stator slot, the 20^{th} stator slot, a 4^{th} stator slot, a 21^{st} stator slot, a 3^{rd} stator slot, a 22^{nd} stator slot, a 7^{th} stator slot, a 17^{th} stator slot, a 8^{th} stator slot, the 17^{th} stator slot, a 9^{th} stator slot, a 16^{th} stator slot, a 10^{th} stator slot, and a 15^{th} stator slot, to be then drawn out. Here, the sub coil 130 is wound in the 20th and 17th stator slots by being overlapped thereon.

Thus, the sub coil 130 is wound in the 17^{th} and 20^{th} stator slots by being overlapped thereon. Accordingly, a magnetomotive force can be sinuously distributed to thus minimize a vibration of the motor, thereby effectively preventing noise caused by the vibration.

In the rotor 110 of the self magnetizing motor 100 according to the present invention having such construction, when an external AC power is applied to the main coil 120 and the sub coil 130 wound the stator slots 111 at the initial driving, respectively, the sub coil 130 having a current phase going 90° ahead as compared to that of the main coil 120, a rotating magnetic field is generated in the stator 110.

At this time, an induced current is applied to the conductive bar 161 of the rotor 160 by the rotating magnetic field of the stator 160, and the rotor 160 then starts to rotate by the induced current. Here, the rotor 160 rotates by being slipped after the initial driving. At this time, the current applied to the sub coil 130 is shielded by a current cut-off device, and the current may only be applied to the main coil 120.

While the rotor 160 rotates, an effect that the exciter magnetizable portion 150 disposed at the outer circumferential surface of the rotor 160 is magnetized with a low density by the rotating magnetic field of the stator 110, namely, a hysteresis effect, is generated. As a result, the rotor 160 can rotate based upon an induction torque generated by the induced current and a hysteresis torque generated by the hysteresis effect.

When the rotor 160 rotates and thus its rotating speed is 2,520 to 2,880 rpm which corresponds to about 70 to 80% of the synchronous speed, upon applying the AC power to the exciter coil 140, a magnetic flux generated by the exciter coil 140 is delivered to the exciter magnetizable portion 150, so that the exciter magnetizable portion 150 can be magnetized with a high density.

The pole shoe 113a of the end portion of each teeth 113 adjacent to each exciter slot 112 among the plurality of teeths 113 is removed, and the taper portion 114a is formed at the end of the exciter pole 114. Accordingly, the magnetic flux generated by the exciter coil 140 is not leaked to thus effectively improve a magnetizing efficiency of the exciter magnetizable portion 150.

As aforementioned, as the exciter magnetizable portion 150 is magnetized with the high density, the rotor 160 can rotate with the synchronous speed of the rotating magnetic field without being slipped. At this time, the induced current may not be applied to the conductive bar 161.

In addition, the main coil 120 and the sub coil 130 are wound in the plurality of stator slots according to the particular winding method. Here, the sub coil 130 is wound in each stator slot 111 adjacent to each exciter slot 112 among the plurality of stator slots 111 by being overlapped thereon. Accordingly, a magnetomotive force can be sinuously distributed and accordingly a vibration of the motor can be minimized, thereby effectively preventing noise caused by the vibration.

As described above, in the present invention, the self magnetizing motor can be operated by the induced electromotive force generated by the main coil, the sub coil and the conductive bar of the rotor from its initial driving to a speed prior to the synchronous speed, and operated by the magnetomotive force generated by the exciter poles and the exciter magnetizable portion at the synchronous speed. Accordingly, the rotor can rotate with the synchronous speed of the magnetic field without being slipped, thereby improving efficiency of the motor and effectively preventing noise caused by the vibration.

As the present invention may be embodied in several forms without departing from the spirit or essential characteristics thereof, it should also be understood that the above-described embodiments are not limited by any of the details of the foregoing description, unless otherwise specified, but rather should be construed broadly within its spirit and scope as defined in the appended claims, and therefore all changes and modifications that fall within the metes and bounds of the claims, or equivalence of such metes and bounds are therefore intended to be embraced by the appended claims.

## Claims

1. A self magnetizing motor comprising:
a stator provided with a plurality of stator slots and a plurality of exciter slots disposed along an inner circumferential surface with a particular interval therebetween, teeths respectively positioned between each stator slot, an exciter pole positioned between the exciter slots, an end portion of the exciter pole being disposed to be closer to a center portion of the stator than an end portion of the teeth is disposed to be close to the center portion of the stator;
a main coil wound in each stator slot;
a sub coil having a current phase going 90° ahead as compared to that of the main coil, and wound in each stator slot;
an exciter coil wound in each exciter slot; and
a rotor rotatably inserted in the center portion of the stator, and having an exciter magnetizable portion disposed at an outer circumferential surface of the rotor to be magnetized by the exciter coil.

2. The self magnetizing motor of claim 1, wherein a gap between the end portion of the exciter pole and an outer circumferential surface of the exciter magnetizable portion is relatively narrower than a gap between the end portion of the teeth and the outer circumferential surface of the exciter magnetizable portion.

3. The self magnetizing motor of claim 1 or 2, wherein the exciter magnetizable portion has a cylindrical structure.

4. The self magnetizing motor of claim 1 or 2, wherein the sub coil is wound in each stator slot adjacent to each exciter slot among the plurality of stator slots by being overlapped thereon.

5. The self magnetizing motor of claim 4, wherein the main coil is inserted into a 1^{st} stator slot, and wound sequentially via a 12^{th} stator slot, a 2^{nd} stator slot, a 11^{th} stator slot, a 3^{rd} stator slot, a 10^{th} stator slot, a 4^{th} stator slot, a 9^{th} stator slot, a 24^{th} stator slot, a 13^{th} stator slot, a 23^{rd} stator slot, a 14^{th} stator slot, a 22^{nd} stator slot, a 15^{th} stator slot, a 21^{st} stator slot, and a 16^{th} stator slot, to be then drawn out, and
the sub coil is inserted into a 6^{th} stator slot, and wound sequentially via a 20^{th} stator slot, a 5^{th} stator slot, the 20^{th} stator slot, a 4^{th} stator slot, a 21^{st} stator slot, a 3^{rd} stator slot, a 22^{nd} stator slot, a 7^{th} stator slot, a 17^{th} stator slot, a 8^{th} stator slot, the 17^{th} stator slot, a 9^{th} stator slot, a 16^{th} stator slot, a 10^{th} stator slot, and a 15^{th} stator slot, to be then drawn out.

6. The self magnetizing motor of claim 1 or 2, wherein the stator is constructed as a plurality of sheets are stacked together.

7. The self magnetizing motor of claim 1 or 2, wherein a thickness between the outer circumferential surface of the stator and the exciter slot is relatively greater than a thickness between the outer circumferential surface of the stator and the stator slot.

8. The self magnetizing motor of claim 1 or 2, wherein a part of the end portion of each teeth adjacent to each exciter slot among the plurality of teeths is removed therefrom.

9. The self magnetizing motor of claim 1 or 2, wherein a taper portion is formed at the end portion of the exciter pole.

10. A method for wining coils on a stator of a self magnetizing motor in a method for winding main and sub coils on a stator of a single-phase 2-pole 24-slot type motor, wherein the sub coil is wound in each stator slot adjacent to each exciter slot among a plurality of stator slots by being overlapped thereon.

11. The method of claim 10, wherein the main coil is inserted into a 1^{st} stator slot, and wound sequentially via a 12^{th} stator slot, a 2^{nd} stator slot, a 11^{th} stator slot, a 3^{rd} stator slot, a 10^{th} stator slot, a 4^{th} stator slot, a 9^{th} stator slot, a 24^{th} stator slot, a 13^{th} stator slot, a 23^{rd} stator slot, a 14^{th} stator slot, a 22^{nd} stator slot, a 15^{th} stator slot, a 21^{st} stator slot, and a 16^{th} stator slot, to be then drawn out, and
the sub coil is inserted into a 6^{th} stator slot, and wound sequentially via a 20^{th} stator slot, a 5^{th} stator slot, the 20^{th} stator slot, a 4^{th} stator slot, a 21^{st} stator slot, a 3^{rd} stator slot, a 22^{nd} stator slot, a 7^{th} stator slot, a 17^{th} stator slot, a 8^{th} stator slot, the 17^{th} stator slot, a 9^{th} stator slot, a 16^{th} stator slot, a 10^{th} stator slot, and a 15^{th} stator slot, to be then drawn out.
